# EUROPÄISCHE PATENTSCHRIFT

(11) **EP 4 549 732 B1**
(45) Veröffentlichungstag und Bekanntmachung des Hinweises auf die Patenterteilung: **09.12.2026**
(21) Anmeldenummer: 23207726.3
(22) Anmeldetag: 03.11.2023
(51) Int. Cl.: F03D 80/40, F03D 1/06

(54) **WINDENERGIEANLAGEN-ROTORBLATT**
WIND TURBINE ROTOR BLADE
PALE DE ROTOR D'ÉOLIENNE

(43) Veröffentlichungstag der Anmeldung: 07.05.2025
(73) Patentinhaber: Wobben Properties GmbH, 26607 Aurich (DE)
(72) Erfinder: Daboul, Hussam, 26624 Südbrookmerland (DE); Krebs, Sven, 26789 Leer (DE); Mahmoud, Muhanad, 26605 Aurich (DE)
(74) Vertreter: Eisenführ Speiser

(56) Entgegenhaltungen:
- EP-A1- 3 450 751
- DE-U1- 20 014 238

## Beschreibung

Die vorliegende Erfindung betrifft ein Windenergieanlagen-Rotorblatt sowie eine Windenergieanlage mit einem entsprechenden Rotorblatt.

Da die Rotorblätter einer Windenergieanlage ungeschützt allen Witterungsbedingungen ausgesetzt sind, kann es bei bestimmten Temperaturen zu einer Vereisung der Rotorblätter kommen. Um dies zu verhindern, kann eine Rotorblattheizung verwendet werden. Hierbei kann entweder eine Heizung außen am Rotorblatt vorgesehen werden oder erwärmte Luft kann innerhalb des Rotorblattes vorgesehen sein.

WO 2017/021350 A1 zeigt ein Windenergieanlagen-Rotorblatt mit einem Rotorblattwurzelbereich und einem Rotorblattspitzenbereich sowie einer Rotorblattheizung. Ferner ist mindestens ein Steg entlang einer Längsrichtung des Rotorblattes vorgesehen. An dem Steg kann eine Umlenkeinheit in Form eines Stegtropfens vorgesehen sein, um eine Verwirbelung der Luft beim Umlenken zu reduzieren.

WO 2018/211055 zeigt ein Rotorblatt einer Windenergieanlage einer Rotorblattheizung mit einem Rotorblatt, welches einen Steg und eine Umlenkeinheit an der Rotorblattspitze zum Umlenken von erwärmter Luft aufweist.

EP 3 450 751 A1 zeigt ein Rotorblatt einer Windenergieanlage mit einer Luftführung und einem Wärmeübertrager im Bereich der Rotorblattspitze.

DE 200 14 238 U1 zeigt ein Rotorblatt einer Windenergieanlage mit einer Heizung mit zwei Stegen sowie einem Umlenkbereich im Bereich der Rotorblattspitze. Ferner ist ein Wärmeübertrager im Bereich der Rotorblattspitze vorgesehen.

Es ist eine Aufgabe der vorliegenden Erfindung, ein Windenergieanlagen-Rotorblatt vorzusehen, welches eine verbesserte Beheizung des Rotorblattes, insbesondere eine verbesserte Beheizung der Rotorblattspitze, ermöglicht.

Diese Aufgabe wird durch ein Windenergieanlagen-Rotorblatt nach Anspruch 1 gelöst.

Somit wird ein Windenergieanlagen-Rotorblatt mit einem Rotorblattwurzelbereich, einem Rotorblattspitzenbereich, einer Druckseite, einer Saugseite, einer Vorderkante, einer Hinterkante vorgesehen. Ferner ist eine Luftführung für erwärmte Luft innerhalb des Rotorblattes vorgesehen. Die Luftführung dient dazu, erwärmte Luft, welche beispielsweise mittels einer Rotorblattheizung erzeugt worden ist, in das Innere des Rotorblattes zu leiten, um die Temperatur des Materials des Rotorblattes soweit anzuheben, dass ein Eisansatz reduziert oder vermieden wird. Das Rotorblatt wird somit mittels der erwärmten Luft beheizt. Die Luftführung weist ein erstes Ende im Rotorblattwurzelbereich und ein zweites Ende im Rotorblattspitzenbereich auf. Der Wärmeübertrager ist als eine Heatpipe mit einem ersten und zweiten Ende ausgestaltet.

Zwischen dem zweiten Ende der Luftführung und dem Rotorblattspitzenbereich ist mindestens ein Wärmeübertrager vorgesehen, um Wärme aus dem Bereich der Luftführung zu dem Rotorblattspitzenbereich zu übertragen.

Optional ist der Wärmeübertrager passiv ausgestaltet, d. h. Wärme wird ohne Energiezufuhr (z. B. in Form einer elektrischen Beheizung) von außen übertragen.

Eine Wärmeübertragung in dem Wärmeübertrager erfolgt durch Wärmeleitung (Wärmediffusion oder Konduktion). Eine Wärmeübertragung in der Luftführung hingegen erfolgt durch Konvektion. Der Wärmeübertrager ist somit ein Wärmeleitungs-Wärmeübertrager.

Gemäß einem Aspekt der vorliegenden Erfindung weist die Luftführung mindestens einen Steg auf, welcher zwischen der Druckseite und der Saugseite und entlang einer Längsrichtung des Rotorblattes sich erstreckt.

Optional kann eine Umlenkeinheit (mit mindestens einem Umlenkbogen) zwischen einem Ende des mindestens einen Stegs und z. B. dem Rotorblattspitzenbereich oder einem weiteren Steg vorgesehen und dazu ausgestaltet sein, erwärmte Luft, welche von dem Rotorblattwurzelbereich entlang des mindestens einen Stegs strömt, umzulenken.

Gemäß einem Aspekt der vorliegenden Erfindung ist der mindestens eine Wärmeübertrager in einem Bereich zwischen der Umlenkeinheit und einem Rotorblattspitzenbereich vorgesehen. Somit kann Wärme am distalen Ende der Stege mittels des Wärmeübertragers weiter zu dem Rotorblattspitzenbereich geleitet werden. Hierbei kann die Wärmeleitung nicht durch Wärmeströmung, sondern innerhalb des Wärmeübertragers erfolgen. Dies ist insbesondere vorteilhaft, wenn in dem Rotorblattspitzenbereich nicht ausreichend Volumen vorhanden ist, um eine effektive Luftströmung für die Lufterwärmung zu erreichen.

Die Ausgestaltung des Wärmeübertragers als passiver Wärmeübertrager ist vorteilhaft, weil damit für die Wärmeübertragung ein reduzierter Querschnitt benötigt wird. Gemäß einem Aspekt der vorliegenden Erfindung erstreckt sich der mindestens eine Wärmeübertrager zwischen einer Umlenkeinheit am Ende der Stege und dem Rotorblattspitzenbereich.

Gemäß einem weiteren Aspekt der vorliegenden Erfindung weist der als Heatpipe ausgestaltete Wärmeüberträger an einem Ende ein Gewinde auf.

Mittels des Gewindes kann die Heatpipe im Bereich der Umlenkeinheit und im Bereich der Rotorblattspitze verschraubt werden, so dass eine Oberfläche erhöht werden kann, welche zur Wärmeübertragung genutzt werden kann.

Ein Wärmerohr bzw. eine Heatpipe ist ein Wärmeübertrager, der unter Nutzung der Verdampfungsenthalpie eines Mediums eine hohe Wärmestromdichte erlaubt. Somit können große Wärmemengen auf kleiner Querschnittsfläche übertragen werden. Ein Wärmerohr kann als eine Heatpipe oder als ein 2-Phasen-Thermosyphon ausgestaltet sein. Die Fähigkeit, Energie zu transportieren, hängt bei dem Wärmerohr bzw. der Heatpipe von der spezifischen Verdampfungsenthalpie des Arbeitsmediums ab.

Gemäß einem weiteren Aspekt der vorliegenden Erfindung wird ein Windenergieanlagen-Rotorblatt vorgesehen, welches eine elektrische Heizeinheit im Bereich des Rotorblattspitzenbereichs aufweist. Zwischen der Heizmatte und dem Rotorblattspitzenbereich ist mindestens ein Wärmeübertrager vorgesehen, um Wärme von der Heizeinheit an den Rotorblattspitzenbereich zu übertragen.

Gemäß einem Aspekt der vorliegenden Erfindung ist der Rotorblattspitzenbereich oder zumindest ein Abschnitt davon abnehmbar ausgestaltet.

Gemäß einem weiteren Aspekt der vorliegenden Erfindung weist die Luftführung eine Abzweigung auf. Eine erfindungsgemäße Umlenkeinheit ist an der Abzweigung vorgesehen und dient der Reduzierung der Druckverluste im Bereich der Abzweigung.

Gemäß der Erfindung kann ein Strömungshindernis in der Luftführung eine Abzweigung der Luftführung oder ein Ende des Bereichs der Luftführung (z. B. ein Ende des Steges) darstellen, wo ein Umlenken der Luftströmung benötigt wird.

Ferner betrifft die Erfindung eine Windenergieanlage mit mindestens einem oben beschriebenen Windenergieanlagen-Rotorblatt und einer Rotorblatt-Heizung.

Gemäß einem Aspekt der vorliegenden Erfindung kann warme bzw. erwärmte Luft (welche durch die Rotorblattheizung erzeugt wird) zur Beheizung des Rotorblattes in den Rotorblattwurzelbereich eingeführt bzw. eingeströmt werden. Die erwärmte Luft kann dann durch eine Luftführung entlang der Länge des Rotorblattes strömen. Die Luftführung kann in dem Bereich zwischen der Vorderkante und einem ersten Steg vorgesehen sein, so dass die erwärmte Luft entlang der Vorderkante und des Steges vom Rotorblattwurzelbereich in Richtung des Rotorblattspitzenbereichs strömt. Alternativ dazu kann die erwärmte Luft in den Bereich zwischen der Hinterkante und dem anderen Steg von dem Wurzelblattwurzelbereich zum Rotorblattspitzenbereich strömen. An einem der Stege ist eine Umlenkeinheit mit mindestens zwei Umlenkbögen vorgesehen. Zur weiteren Erwärmung auch der Rotorblattspitze wird ein Wärmeübertrager (durch Wärmeleitung) zwischen dem Ende der Luftführung und der Rotorblattspitze vorgesehen.

Somit wird ein Windenergieanlagen-Rotorblatt mit einem Rotorblattwurzelbereich, einem Rotorblattspitzenbereich, einer Druckseite, einer Saugseite und mindestens einem Steg vorgesehen, welcher sich entlang einer Längsrichtung des Rotorblattes erstreckt. Die Rotorblattspitze kann zwar hohl ausgestaltet sein, aber mit einem Füllmaterial ausgeschäumt sein. Damit wird eine effektive Beheizung einer Rotorblattspitze behindert. Dies kann zu einem Eisansatz insbesondere im Bereich der Rotorblattspitze und kann aufgrund der hohen Geschwindigkeit der Rotorblattspitze zu einem gefährlichen Eisabwurf führen.

Zur weiteren Verbesserung kann eine Bypass-Hutze in oder an einem der Stege vorgesehen werden, welche die Strömung im Umlenkbereich optimiert, in dem die Grenzschichtströmung am Stegende abgesaugt wird und somit Strömungsabrisse und Verwirbelungen vermindert werden können.

Gemäß der Erfindung wird ein Windenergieanlagen-Rotorblatt vorgesehen, welches mindestens ein, vorzugsweise zwei, Stege entlang der Längsrichtung des Rotorblattes aufweist. Zur Beheizung des Rotorblattes kann eine Luftströmung entlang der Stege vorgesehen sein. Die Luftströmung startet im Rotorblattwurzelbereich und die, vorzugsweise erwärmte, Luft strömt entlang des ersten und/oder zweiten Steges und muss umgelenkt werden. Dies erfolgt durch eine Umlenkeinheit mit mindestens einem Umlenkbogen.

Die Umlenkeinheit kann mindestens einen (insbesondere zwei oder drei) Umlenkbögen aufweisen. Die Umlenkbögen können in Längsrichtung beabstandet mit der offenen Seite zur Rotorblattwurzel angeordnet sein.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische und abschnittsweise Darstellung eines Rotorblattes der Windenergieanlage von Fig. 1,
- Fig. 3: zeigt eine schematische Darstellung eines Abschnitts eines Rotorblattes gemäß der Erfindung,
- Fig. 4: zeigen jeweils eine schematische Darstellung eines Rotorblattspitzen-
- und 5: bereichs und einer Rotorblattspitze eines Rotorblattes gemäß einem Aspekt der vorliegenden Erfindung,
- Fig. 6: zeigt eine schematische Darstellung eines Wärmeübertragers,
- Fig. 7A: zeigen jeweils eine schematische Darstellung eines Wärmeüber-
- und 7B: tragers,
- Fig. 8: zeigt ebenfalls eine schematische Darstellung eines Wärmeübertragers,
- Fig. 9: zeigt eine schematische Darstellung eines Rotorblattspitzenbereichs und einer Rotorblattspitze gemäß einem Aspekt der vorliegenden Erfindung, und
- Fig. 10: zeigt eine schematische Darstellung eines Rotorblattspitzenbereichs und einer Rotorblattspitze gemäß einem Aspekt der vorliegenden Erfindung.

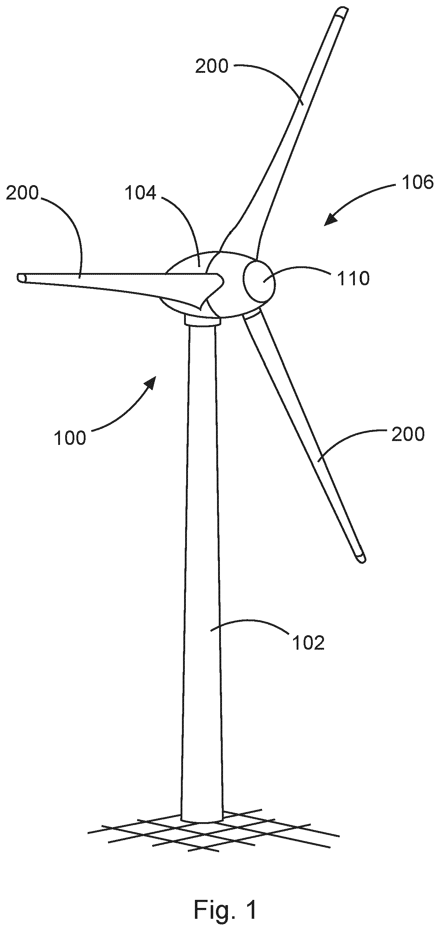

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden.

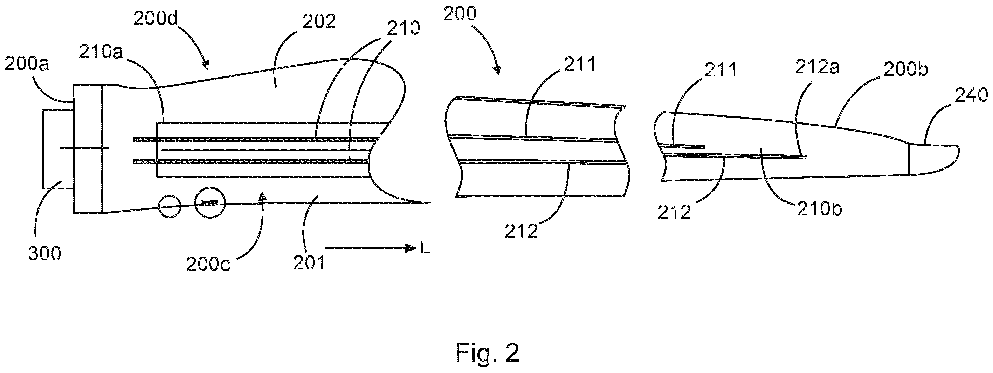

Fig. 2 zeigt eine schematische und abschnittsweise Darstellung eines Rotorblattes der Windenergieanlage von Fig. 1. Das Rotorblatt 200 weist einen Rotorblattwurzelbereich 200a, einen Rotorblattspitzenbereich 200b, eine Rotorblattspitze 240, eine Vorderkante 201, eine Hinterkante 202, eine Druckseite 200c und eine Saugseite 200d auf. Innerhalb des Rotorblattes 200 ist eine Luftführung vorgesehen, die mindestens ein Strömungshindernis aufweist. Eine Rotorblattheizung 300 kann im Bereich des Rotorblattwurzelbereichs 200 vorgesehen sein. Die Rotorblattheizung 300 weist mindestens einen Luftfilter auf und erzeugt warme Luft, die in das Innere des Rotorblattes geleitet wird.

Entlang einer Längsrichtung L des Rotorblattes 200 erstreckt sich innerhalb des Rotorblattes mindestens ein Steg 210, der Teil der Luftführung ist bzw. der aus anderen Gründen bereits vorhanden ist und die Luftführung lediglich eine sekundäre Funktion ist. Beispielsweise können zwei Stege 211, 212 vorgesehen sein, welche zunächst parallel und optional im Bereich der Rotorblattspitze 240 aufeinander zulaufend ausgestaltet sein können. Hierbei kann die Länge des ersten Steges 211 geringer sein als die Länge des zweiten Steges 212. Die Rotorblattspitze 240 kann optional als ein separates Teil ausgestaltet sein und an dem Rest des Rotorblattes 200 befestigt werden.

Durch die Rotorblattheizung erwärmte Luft kann entlang der Stege - als Teil der Luftführung - in Richtung der Rotorblattspitze 240 geführt und dann umgelenkt werden. Optional kann die Rotorblattspitze 240 zumindest teilweise hohl ausgestaltet sein, so dass ein Teil der erwärmten Luft durch die Rotorblattspitze 240 strömen kann, um die Rotorblattspitze 240 zu enteisen.

Gemäß einem Aspekt der vorliegenden Erfindung kann die erwärmte Luft mittels der Rotorblattheizung 300 entweder im Rotorblattwurzelbereich erzeugt werden, in dem Luft mittels einer Heizeinheit 300 erwärmt wird oder die erwärmte Luft wird dem Rotorblatt 200 in dem Rotorblattwurzelbereich 200a zugeführt.

Gemäß einem Aspekt der vorliegenden Erfindung kann die Luftführung eine Abzweigung aufweisen, um beispielsweise verschiedene Abschnitte innerhalb des Rotorblattes mit erwärmter Luft versorgen zu können. Im Bereich der Abzweigung ist eine erfindungsgemäße Umlenkeinheit 250 mit mindestens zwei Umlenkbögen vorgesehen, so dass erwärmte Luft, welche mittels der Abzweigung abgezweigt werden soll, auch durch die Umlenkeinheit strömt und damit umgelenkt wird.

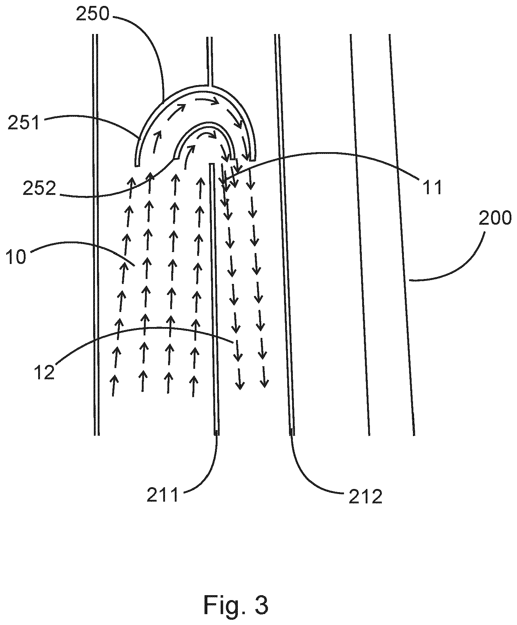

Fig. 3 zeigt eine schematische Darstellung eines Abschnitts eines Rotorblattes gemäß der Erfindung. Das Rotorblatt 200 weist zwei Stege 211, 212 auf, welche beispielsweise wie in Fig. 2 gezeigt verlaufen können. An dem ersten Steg 211 oder alternativ an dem zweiten Steg 212 ist eine Umlenkeinheit 250 vorgesehen. Die Umlenkeinheit 250 soll dazu dienen, erwärmte Luft, welche zwischen einer Vorderkante und dem ersten Steg 211, zwischen dem ersten und zweiten Steg 211, 212 oder zwischen dem zweiten Steg 212 und der Hinterkante von der Rotorblattwurzel Richtung Rotorblattspitze strömt, umzulenken. Die erwärmte Luft kann durch die Rotorblattheizung 300 im Bereich der Rotorblattwurzel erzeugt werden.

Die Umlenkeinheit 250 kann einen Umlenkbogen, insbesondere zwei Umlenkbögen 251, 252, aufweisen. Hierbei kann der erste Umlenkbogen 251 einen größeren Radius aufweisen als der zweite Umlenkbogen 252. Zwischen einem Ende 211a des ersten Steges 211 und dem zweiten Umlenkbogen 252 ist ein Freiraum vorgesehen, so dass warme Luft durch den zweiten Umlenkbogen 252 umgelenkt werden kann. In einem Abstand zum zweiten Umlenkbogen 252 ist der erste Umlenkbogen 251 vorgesehen, der einen größeren Radius aufweist als der zweite Umlenkbogen 252. Das erste Ende des Umlenkbogens ragt in einen Bereich zwischen der Vorderkante 201 und dem ersten Steg 211. Das zweite Ende ragt in den Bereich zwischen dem ersten und zweiten Steg 211, 212. Optional kann das erste Ende des ersten Umlenkbogens 251 eine Verlängerung aufweisen, so dass das erste Ende des ersten Umlenkbogens 251 an eine Wandung der Vorderkante 201 zumindest teilweise angrenzt. Der zweite Umlenkbogen 252 weist ein erstes und zweites Ende und einen Bogenabschnitt 252b dazwischen auf.

In Fig. 3 ist ein Abschnitt des Rotorblattes 200 mit einer Umlenkeinheit 250 gemäß der Erfindung dargestellt, welche einen ersten und zweiten Umlenkbogen 251, 252 aufweist. Erwärmte Luft 10 kann entlang des ersten Steges 211 strömen und trifft auf die Umlenkeinheit 250, wo sie in einen Bereich zwischen dem ersten und zweiten Steg 211, 212 umgelenkt werden kann. Hierbei entsteht jedoch ein Totluftgebiet 11 am Ende des Steges 211.

Die Umlenkeinheit 250 mit mindestens einem Umlenkbogen 251, 252 bewirkt eine erhebliche Reduzierung des Totluftgebietes 11. Dies führt zu einer Reduzierung des Druckverlustes durch die Umlenkeinheit. Damit kann die Beheizung des Rotorblattes 200 erheblich verbessert werden.

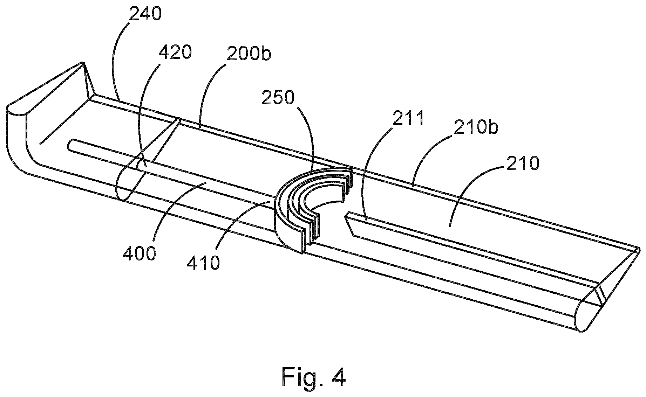

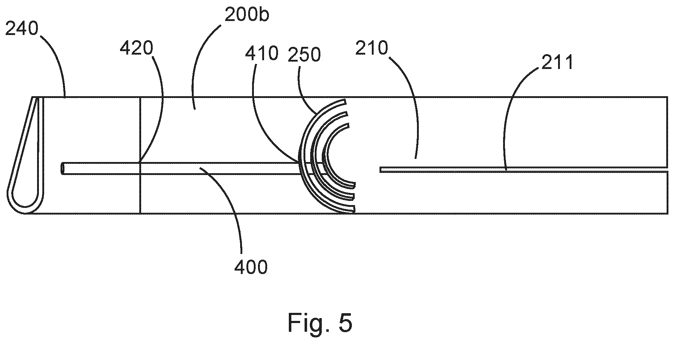

Fig. 4 und Fig. 5 zeigen jeweils eine schematische Darstellung eines Rotorblattspitzenbereichs und einer Rotorblattspitze eines Rotorblattes gemäß einem Aspekt der vorliegenden Erfindung. Das Rotorblatt 200 weist eine Luftführung 210, optional eine Umlenkeinheit 250, einen Rotorblattspitzenbereich 220 und eine Rotorblattspitze 240 auf. Zwischen der Rotorblattspitze 240 und einem distalen (zweiten) Ende 210b der Luftführung 210 ist mindestens ein Wärmeübertrager 400 vorgesehen. Der Wärmeübertrager 400 weist ein erstes Ende 410 und ein zweites Ende 420 auf. Das erste Ende 410 erstreckt sich zu dem zweiten Ende 210b der Luftführung und optional in den Bereich der Umlenkeinheit 250 hinein. Das zweite Ende 420 des Wärmeübertragers 400 ist mit der Rotorblattspitze 240 gekoppelt. An dem ersten Ende 410 des Wärmeübertragers 400 wird Wärme von der Luftführung aufgenommen und durch den Wärmeübertrager 400 zu der Rotorblattspitze 240 mittels Wärmeleitung übertragen. Dies führt zu einer Erwärmung des Materials im Bereich der Rotorblattspitze 240. Das Vorsehen des Wärmeübertragers zwischen dem zweiten Ende 210b der Luftführung, welches gleichzeitig das Ende der Luftführung darstellt, und der Rotorblattspitze ermöglicht eine Erwärmung des Materials im Bereich der Rotorblattspitze, ohne dass dazu ein aktiver Wärmeübertrager benötigt wird. Dies ist insbesondere vorteilhaft, wenn das Volumen im Bereich der Rotorblattspitze zu klein ist, um eine effektive Luftströmung zu ermöglichen.

Der Wärmeübertrager 400 kann als Stab mit einem Material ausgestaltet sein, das über eine gute Wärmeleitfähigkeit verfügt, z. B. Kupfer.

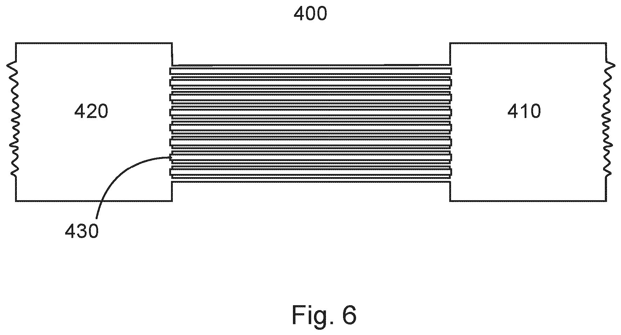

Fig. 6 zeigt eine schematische Darstellung eines Wärmeübertragers. Der Wärmeübertrager 400 ist hier als eine Heatpipe ausgestaltet. Das erste Ende 410 dient als Verdampfer und das zweite Ende 420 dient als Kondensator. Somit kann der Wärmeübertrager 400 Wärme von dem ersten Ende 410 zu dem zweiten Ende 420 übertragen.

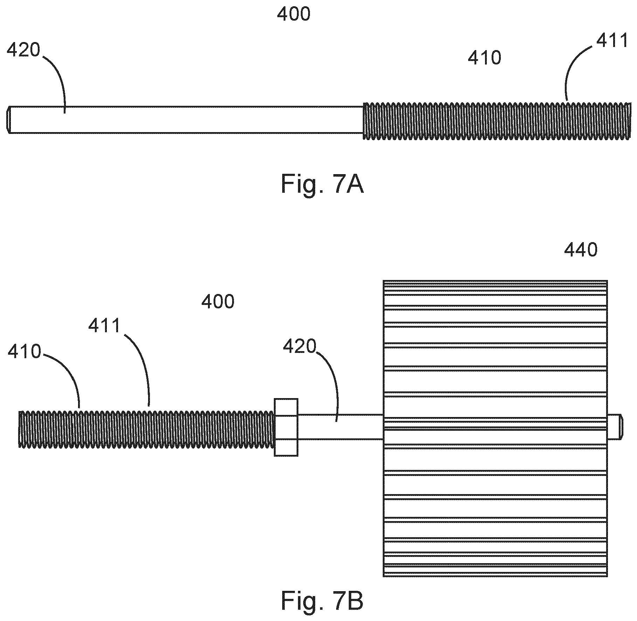

Fig. 7A und 7B zeigen jeweils eine schematische Darstellung eines Wärmeübertragers 400. In Fig. 7A ist der Wärmeübertrager 400 mit einem ersten und zweiten Ende 410, 420 dargestellt. Der Wärmeübertrager 400 kann insbesondere als ein Stab beispielsweise aus Metall ausgestaltet sein. An dem ersten Ende 410 kann ein Gewinde 411 vorgesehen sein. Das Gewinde kann auch alternativ dazu an dem zweiten Ende 420 vorgesehen sein. Mittels des Gewindes 411 kann das erste Ende 410 des Wärmeübertragers 400 zum Beispiel in oder an einer Umlenkeinheit 250 verschraubt sein. Alternativ dazu kann der Wärmeübertrager 400 auch mittels eines entsprechenden Gewindes an der Rotorblattspitze 240 verschraubt sein. Durch das Vorsehen des Gewindes kann eine Kontaktoberfläche zwischen dem Wärmeübertrager und der Umlenkeinheit oder der Rotorblattspitze vergrößert werden.

In Fig. 7B ist eine alternative Ausgestaltung vorgesehen, wobei ein Element 440 mit bzw. an dem Wärmeübertrager 400 gekoppelt ist.

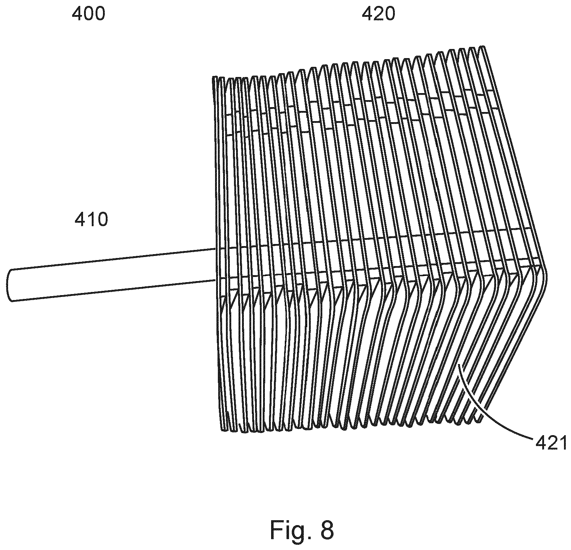

Fig. 8 zeigt eine weitere schematische Darstellung eines Wärmeübertragers gemäß einem Aspekt der vorliegenden Erfindung. Der Wärmeübertrager 400 weist ein erstes Ende 410 und ein zweites Ende 420 auf. Der Wärmeübertrager 400 ist in Form einer Heatpipe ausgestaltet. An dem zweiten Ende 420 kann eine Mehrzahl von Wärmeübertragungsrippen 421 vorgesehen sein.

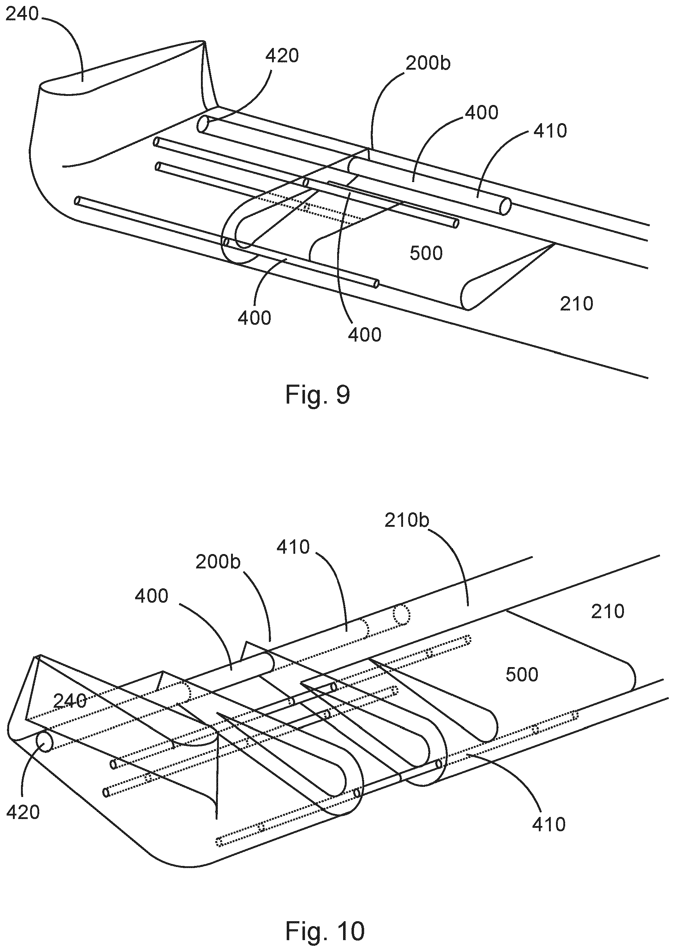

Fig. 9 zeigt eine schematische Darstellung eines Rotorblattspitzenbereichs sowie einer Rotorblattspitze eines Rotorblatts gemäß einem Aspekt der vorliegenden Erfindung. Das Rotorblatt weist einen Rotorblattspitzenbereich 200b sowie eine Rotorblattspitze 240 auf. In dem Rotorblattspitzenbereich 200b kann eine aktive Heizeinheit 500 vorgesehen sein. Diese Heizeinheit 500 kann beispielsweise eine elektrisch betriebene Heizeinheit darstellen. Ferner ist mindestens ein Wärmeübertrager 400 vorgesehen. Ein erstes Ende 410 des Wärmeübertragers befindet sich im Bereich der Heizeinheit. Das zweite Ende 420 des Wärmeübertragers befindet sich in der Rotorblattspitze 240 oder ist mit der Rotorblattspitze 240 gekoppelt.

Fig. 10 zeigt eine weitere Ausgestaltung des Rotorblattspitzenbereichs und einer Rotorblattspitze eines Rotorblattes gemäß einem Aspekt der vorliegenden Erfindung. Der Aufbau des Rotorblattes von Fig. 10 entspricht im Wesentlichen dem Aufbau des Rotorblattes von Fig. 9. Somit ist ein Rotorblatt mit einer Luftführung 210, einem Rotorblattspitzenbereich 200b und einer Rotorblattspitze 240 vorgesehen. An dem zweiten Ende 210b der Luftführung kann mindestens eine aktive Heizeinheit 500 vorgesehen sein. Zwischen der Heizeinheit 500 und der Rotorblattspitze 240 kann mindestens ein, beispielsweise auch mehrere Wärmeübertrager 400 zur Wärmeleitung vorgesehen sein.

## Patentansprüche

1. Windenergieanlagen-Rotorblatt (200), mit
einem Rotorblattwurzelbereich (200a),
einem Rotorblattspitzenbereich (200b),
einer Rotorblattspitze (240),
einer Druckseite (200c),
einer Saugseite (200d),
einer Luftführung (210) für erwärmte Luft mit einem ersten Ende (210a) an dem Rotorblattwurzelbereich (200b) und einem zweiten Ende (210b) an dem Rotorblattspitzenbereich (200b), und
mindestens einem Wärmeübertrager (400) zwischen dem zweiten Ende (210b) der Luftführung (210) und dem Rotorblattspitzenbereich (200b) oder der Rotorblattspitze (240),
**dadurch gekennzeichnet, dass**
der Wärmeübertrager (400) als eine Heatpipe mit einem ersten und zweiten Ende (410, 420) ausgestaltet ist.

2. Windenergieanlagen-Rotorblatt (200) nach Anspruch 1, wobei
die Luftführung (210) mindestens einen Steg (210, 211, 212) aufweist, welcher zwischen der Druckseite (200c) und der Saugseite (200d) angeordnet ist und entlang einer Längsrichtung (L) des Rotorblattes (200) erstreckt,
wobei der mindestens eine Wärmeübertrager (400) zwischen einem Ende des Stegs (211) und der Rotorblattspitze (240) vorgesehen ist.

3. Windenergieanlagen-Rotorblatt (200) nach einem der Ansprüche 1 oder 2, wobei der Wärmeübertrager (400) als ein Wärmeleitungs-Wärmeübertrager (400) ausgestaltet ist.

4. Windenergieanlagen-Rotorblatt (200) nach Anspruch 2 oder nach den Ansprüchen 2 und 3, ferner mit einem Umlenkbereich (250) zwischen einem Ende des mindestens einen Stegs (210, 211, 212) und dem Rotorblattspitzenbereich (200b), welcher dazu ausgestaltet ist, Luft, welche von dem Rotorblattwurzelbereich (200a) entlang des mindestens einen Stegs (210-212) strömt, umzulenken.

5. Windenergieanlagen-Rotorblatt (200) nach einem der Ansprüche 1 bis 4, wobei
der Wärmeübertrager (400) als ein passiver Wärmeübertrager ausgestaltet ist und Wärme ohne Energiezufuhr von außen überträgt.

6. Windenergieanlagen-Rotorblatt (200) nach Anspruch 1, wobei
das erste und/oder das zweite Ende (410, 420) des Wärmeübertragers (400) ein Gewinde zur Vergrößerung einer Kontaktfläche aufweist.

7. Windenergieanlagen-Rotorblatt (200)
nach einem der Ansprüche 1 bis 6, ferner mit
mindestens einer aktiven Heizeinheit (500) im Rotorblattspitzenbereich (200b), wobei
die ersten Enden (410) des mindestens einen Wärmeübertragers (400) im Bereich der aktiven Heizeinheit (500) vorgesehen sind und die zweiten Enden (420) des mindestens einen Wärmeübertragers (400) in oder an der Rotorblattspitze (240) vorgesehen sind.

8. Windenergieanlagen-Rotorblatt (200) nach einem der Ansprüche 1 bis 7, wobei
die Luftführung (210) eine Abzweigung und eine Umlenkeinheit (250) an der Abzweigung aufweist.

9. Windenergieanlage (100), mit
mindestens einem Windenergieanlagen-Rotorblatt (200) nach einem der Ansprüche 1 bis 8, und
mindestens einer Rotorblattheizung (300) zum Bereitstellen von erwärmter Luft für das Windenergieanlagen-Rotorblatt (200).

## Claims

1. Wind turbine rotor blade (200), comprising
a rotor blade root region (200a),
a rotor blade tip region (200b),
a rotor blade tip (240),
a pressure side (200c),
a suction side (200d),
an air duct (210) for heated air, having a first end (210a) at the rotor blade root region (200b) and a second end (210b) at the rotor blade tip region (200b), and
at least one heat exchanger (400) between the second end (210b) of the air duct (210) and the rotor blade tip region (200b) or the rotor blade tip (240),
**characterized in that** the heat exchanger (400) is configured as a heat pipe having a first and a second end (410, 420).

2. Wind turbine rotor blade (200) according to claim 1, wherein the air duct (210) comprises at least one web (210, 211, 212) which is arranged between the pressure side (200c) and the suction side (200d) and extends along a longitudinal direction (L) of the rotor blade (200),
wherein the at least one heat exchanger (400) is provided between an end of the web (211) and the rotor blade tip (240).

3. Wind turbine rotor blade (200) according to either claim 1 or claim 2, wherein the heat exchanger (400) is configured as a conduction heat exchanger (400).

4. Wind turbine rotor blade (200) according to claim 2 or claims 2 and 3, further comprising
a deflection region (250) between an end of the at least one web (210, 211, 212) and the rotor blade tip region (200b), which is configured to deflect air flowing from the rotor blade root region (200a) along the at least one web (210-212).

5. Wind turbine rotor blade (200) according to one of claims 1 to 4, wherein
the heat exchanger (400) is configured as a passive heat exchanger and transfers heat from the outside without a supply of energy.

6. Wind turbine rotor blade (200) according to claim 1, wherein
the first and/or the second end (410, 420) of the heat exchanger (400) has a thread for enlarging a contact surface.

7. Wind turbine rotor blade (200) according to one of claims 1 to 6, further comprising
at least one active heating unit (500) in the rotor blade tip region (200b), wherein
the first ends (410) of the at least one heat exchanger (400) are provided in the region of the active heating unit (500) and the second ends (420) of the at least one heat exchanger (400) are provided in or on the rotor blade tip (240).

8. Wind turbine rotor blade (200) according to one of claims 1 to 7, wherein
the air duct (210) has a branch and a deflection unit (250) at the branch.

9. Wind turbine (100), comprising
at least one wind turbine rotor blade (200) according to one of claims 1 to 8, and
at least one rotor blade heater (300) for providing heated air for the wind turbine rotor blade (200).

## Revendications

1. Pale de rotor d'éolienne (200), avec
une zone de pied de pale de rotor (200a),
une zone de pointe de pale de rotor (200b),
une pointe de pale de rotor (240),
un côté de pression (200c),
un côté d'aspiration (200d),
un guide d'air (210) pour air chauffé avec une première extrémité (210a) sur la zone de pied de pale de rotor (200b) et une seconde extrémité (210b) sur la zone de pointe de pale de rotor (200b), et
au moins un échangeur de chaleur (400) entre la seconde extrémité (210b) du guide d'air (210) et la zone de pointe de pale de rotor (200b) ou la pointe de pale de rotor (240),
**caractérisée en ce que**
l'échangeur de chaleur (400) est configuré comme un caloduc avec une première et une seconde extrémité (410, 420).

2. Pale de rotor d'éolienne (200) selon la revendication 1, dans laquelle
le guide d'air (210) comporte au moins une nervure (210, 211, 212), qui est disposée entre le côté de pression (200c) et le côté d'aspiration (200d) et qui s'étend le long d'une direction longitudinale (L) de la pale de rotor (200),
dans laquelle l'au moins un échangeur de chaleur (400) est prévu entre une extrémité de la nervure (211) et la pointe de pale de rotor (240).

3. Pale de rotor d'éolienne (200) selon l'une quelconque des revendications 1 ou 2, dans laquelle l'échangeur de chaleur (400) est configuré comme un échangeur de chaleur à conduction thermique (400).

4. Pale de rotor d'éolienne (200) selon la revendication 2 ou selon les revendications 2 et 3, en outre avec
une zone de déviation (250) entre une extrémité de l'au moins une nervure (210, 211, 212) et la zone de pointe de pale de rotor (200b) qui est configurée pour dévier de l'air circulant depuis la zone de pied de pale de rotor (200a) le long de l'au moins une nervure (210-212).

5. Pale de rotor d'éolienne (200) selon l'une quelconque des revendications 1 à 4, dans laquelle
l'échangeur de chaleur (400) est configuré comme un échangeur de chaleur passif et transmet de la chaleur sans apport d'énergie depuis l'extérieur.

6. Pale de rotor d'éolienne (200) selon la revendication 1, dans laquelle
la première et/ou la seconde extrémité (410, 420) de l'échangeur de chaleur (400) présentent un filetage pour agrandir une surface de contact.

7. Pale de rotor d'éolienne (200) selon l'une quelconque des revendications 1 à 6, en outre avec
au moins une unité de chauffage active (500) dans la zone de pointe de pale de rotor (200b), dans laquelle
les premières extrémités (410) de l'au moins un échangeur de chaleur (400) sont prévues dans la zone de l'unité de chauffage active (500) et les secondes extrémités (420) de l'au moins un échangeur de chaleur (400) sont prévues dans ou sur la pointe de pale de rotor (240).

8. Pale de rotor d'éolienne (200) selon l'une quelconque des revendications 1 à 7, dans laquelle
le guide d'air (210) présente un embranchement et une unité de déviation (250) sur l'embranchement.

9. Éolienne (100), avec
au moins une pale de rotor d'éolienne (200) selon l'une quelconque des revendications 1 à 8, et
au moins un chauffage de pale de rotor (300) pour fournir de l'air chauffé pour la pale de rotor d'éolienne (200).
